(19) Europäisches Patentamt
European Patent Office
Office européen des brevets

(11) Veröffentlichungsnummer : **0 176 726 B2**

(12) # NEUE EUROPÄISCHE PATENTSCHRIFT

(45) Veröffentlichungstag der neuen Patentschrift : **21.11.91 Patentblatt 91/47**

(21) Anmeldenummer : **85110313.5**

(22) Anmeldetag : **17.08.85**

(51) Int. Cl.[5] : **C08G 18/10**, C08G 18/12, C08G 18/42, C08G 18/46, C08G 18/66, C08G 18/76, C09J 175/06, B32B 7/12

(54) **Verwendung von Lösungen von Polyisocyanaten und Hydroxylgruppen aufweisenden Oligourethanen als Klebemittel für Folienverbunde.**

Die Akte enthält technische Angaben, die nach dem Eingang der Anmeldung eingereicht wurden und die nicht in dieser Patentschrift enthalten sind.

(30) Priorität : **29.08.84 DE 3431688**

(43) Veröffentlichungstag der Anmeldung : **09.04.86 Patentblatt 86/15**

(45) Bekanntmachung des Hinweises auf die Patenterteilung : **17.11.88 Patentblatt 88/46**

(45) Bekanntmachung des Hinweises auf die Entscheidung über den Einspruch : **21.11.91 Patentblatt 91/47**

(84) Benannte Vertragsstaaten : **AT BE CH DE FR GB IT LI NL SE**

(56) Entgegenhaltungen :
**DE-A- 2 318 440**
**FR-A- 1 073 303**
**US-A- 3 574 048**
**US-A- 3 804 810**
**US-A- 4 206 299**
**Werkbroschüre der Fa. Wikolin Polymer Chemie GmbH "Polybond 380-29", 10.02.81 und "Polybond 380-29/7, 15.11.82**
**IR-Spektrum von "Desmocoll 100L"**

(73) Patentinhaber : **BAYER AG**
**W-5090 Leverkusen 1 Bayerwerk (DE)**

(72) Erfinder : **Meckel, Walter, Dr.**
**Zonser Strasse 9**
**W-4040 Neuss (DE)**
Erfinder : **Müller-Albrecht, Horst, Dr.**
**Roggendorfstrasse 59**
**W-5000 Köln 80 (DE)**
Erfinder : **Dollhausen, Manfred, Dr.**
**Herzogenfeld 21**
**W-5068 Odenthal (DE)**

**EP 0 176 726 B2**

Jouve, 18, rue Saint-Denis, 75001 PARIS

**Beschreibung**

Die Erfindung betrifft die Verwendung von ausgewählten, lösungsmittelhaltigen Zweikomponenten-Klebstoffen auf Basis von organischen Polyisocyanaten und ausgewählten, Hydroxylgruppen aufweisenden Oligourethanen als Klebemittel bei der Herstellung von Folienverbunden.

Folienverbunde, beispielsweise Verbunde von Polyethylen-, Polypropylen-, Polyamid-, Polyethylenterephthalat-, Cellophan- oder Aluminium- Folien mit sich selbst oder untereinander werden vorzugsweise unter Verwendung von Polyurethanklebstoffen hergestellt. Bei diesen Klebstoffen handelt es sich im allgemeinen um Zweikomponenten- Klebstoffe auf Basis von linearen Polyurethanen und höherfunktionellen Polyisocyanaten als Vernetzer, die in Form von 10- bis 40-gew.-%igen Lösungen in niedrigsiedenden Lösungsmitteln wie z.B. Ethylacetat oder Aceton verarbeitet werden (vgl. z.B. DE-OS 25 49 227).

Aus ökologischen und wirtschaftlichen Gründen besteht ein grosser Wunsch nach lösungsmittelärmeren Systemen, die sich auf den vorhandenen Kaschieranlagen verarbeiten lassen. Dies erfordert jedoch Klebstoffe, die bei einem Feststoffgehalt von mindestens 45 Gew.-% eine Lösungsviskositat von höchstens 150 mPa·s aufweisen. Durch die den Polyurethanchemikern bekannten Massnahmen, beispielsweise durch die Mitverwendung von reaktiven Verdünnern oder durch Verwendung eines beträchtlichen Diisocyanat-Unterschusses bei der Herstellung der Hydroxylgruppen aufweisenden Polyurethanene ist es zwar möglich, Zweikomponenten-Systeme der geforderten niedrigen Viskosität bei hohem Feststoffgehalt der Lösungen herzustellen, jedoch weisen mit derartigen Systemen hergestellte Verbunde nur eine äusserst geringe Anfangsfestigkeit auf, was die Handhabung der frisch hergestellten Verbunde enorm erschwert. Ausserdem ist die Praxis an solchen Klebstoffen interessiert, die eine möglichst geringe Lösungsmittelretention aufweisen, so dass eine weitgehende Entfernung des Lösungsmittels vor Herstellung der Verbunde durch kurzzeitiges Erhitzen der mit dem Klebstoff beschichteten Folie möglich ist.

Aus US-A-3 804 810 und US-A-4 206 299 sind Klebstofflösungen bekannt, die einen einzelnen Mischpolyester enthalten, aber eine erhebliche Lösungsmittelretention aufweisen.

Die Verwendung von Kombinationen aus organischen Polyisocyanaten und Hydroxylgruppen aufweisenden Oligourethanen als Zweikomponenten- Folienklebstoffe ist zwar im Prinzip aus DE-PS-2 318 440 bereits bekannt, jedoch sind die in dieser Vorveröffentlichung beschriebenen Klebstoffe auf Basis von urethanmodifizierten Polyetherpolyesterglykolen ebenfalls mit dem Nachteil einer für die Praxis zu hohen Viskosität behaftet.

Es war demzufolge die der Erfindung zugrundeliegende Aufgabe, neue Zweikomponenten-Klebstoffe zur Verfügung zu stellen, die den genannten Anforderunmgen der Praxis genügen.

Gegenstand der Erfindung ist die Verwendung von Lösungen mit einem Feststoffgehalt von mindestens 45 Gew.-% in gegenüber Isocyanatgruppen inerten organischen Lösungsmitteln von

a) mindestens einem organischen Polyisocyanat mit einer (mittleren) NCO-Funktionalität von mindestens 2,0,

b) mindestens einem ein im wesentlichen urethanmodifiziertes, Ethergruppen-freies Polyesterpolyol darstellenden Oligourethan mit einem Hydroxylgruppengehalt von 0,4 bis 2,2 Gew.-%, einem Urethangruppengehalt von 1,4 bis 7 Gew.-% und einem Molekulargewicht von 1500 bis 8000, welches sowohl aliphatische als auch aromatische Dicarbonsäuresegmente in über Estergruppen eingebauter Form enthält,

c) gegebenenfalls den aus der Klebstofftechnologie bekannten Hilfs- und Zusatzmitteln, wobei die Mengen der Komponenten a) und b) einem NCO/OH-Äquivalentverhältnis von mindestens 1:1,5 entsprechen, als Klebemittel bei der Herstellung von Folienverbunden, dadurch gekennzeichnet, dass man als Komponente b) Umsetzungsprodukte verwendet

$b_1$) mindestens eines organischen Diisocyanates mit

$b_2$) einem Polyestergemisch, bestehend im wesentlichen aus

(i) 50 bis 90 Gew.-% eines Polyesterdiols des Molekulargewichtsbereichs 1400 bis 3000 aus Adipinsäure und ortho- Phthalsäure im Molverhältnis 40:60 bis 80:20 und überschüssigen Mengen eines Alkandiols mit 2-6 C-Atomen und

(ii) 10 bis 50 Gew.-% eines Polyesterdiols des Molekulargewichtsbereichs 1000 bis 3000 aus Adipinsäure und einer überschüssigen Menge einer Mischung von mindestens zwei voneinander verschiedenen Alkandiolen mit 2-6 C-Atomen, wobei mindestens zwei der Alkandiole in einer Menge von mindestens 20 Mol-% vorliegen, wobei die Komponente $b_2$) aliphatische und aromatische Dicarbonsäuresegmente im Molverhältnis 8:1 bis 1:5 enthält, und gegebenenfalls

$b_3$) niedermolekularen Kettenverlängerungsmitteln, wobei bei der Herstellung der Oligourethane b) ein NCO/OH-Äquivalentverhältnis von 1:1,4 bis 1:5,0 eingehalten wird.

Als Polyisocyanatkomponente a) werden Polyisocyanate bzw. Polyisocyanatgemische einer mittleren Funktionalität von mindestens 2,0, vorzugsweise 2,3 bis 3,5 verwendet. Es handelt sich hierbei um an sich

bekannte Polyisocyanate wie beispielsweise das Umsetzungsprodukt von Trimethylolpropan mit 2,4- Diisocyanatotoluol (hergestellt durch Umsetzung eines hohen Überschusses des Diisocyanats mit dem Triol unter anschliessender destillativer Entfernung des nicht abreagierten Diisocyanat-Überschusses), Tris-(isocyanatohexyl) -biuret bzw. dessen Gemische mit seinen höheren Homologen, Isocyanuratgruppen aufweisende Polyisocyanate auf Basis von 2,4-Diisocyanatotoluol oder Polyisocyanatgemische der Diphenylmethanreihe der genannten NCO-Funktionalität, wie sie durch Phosgenierung von Anilin/Formaldehyd- Kondensaten in an sich bekannter Weise zugänglich sind. Gut eignen sich auch bei Raumtemperatur flüssige Gemische von 2,4'- und 4,4'- Diisocyanatodiphenylmethan.

Als Komponente b) werden in den erfindungsgemäss zu verwendenden Klebstoffen Hydroxylgruppen aufweisende Oligourethane des aus der Stöchiometrie der Ausgangsmaterialien errechenbaren mittleren Molekulargewichts 1500 bis 8000, vorzugsweise 3000 bis 6000 eingesetzt, welche von 0,4 bis 2,2, vorzugsweise 0,6 bis 1,4 Gew.-% an Hydroxylgruppen und von 1,4 bis 7 Gew.-% an eingebauten Urethangruppen -NH-CO-O- aufweisen. Es handelt sich bei diesen Oligourethanen um gegebenenfalls eingebaute Kettenverlängerungsmittel aufweisende, urethanmodifizierte, Ethergruppen-freie Polyesterpolyole auf Basis von $b_1$) organischen Diisocyanaten, $b_2$) Ethergruppen-freien Polyesterpolyolen und gegebenenfalls $b_3$) niedermolekularen Kettenverlängerungsmitteln.

Als Aufbaukomponente $b_1$) geeignete Diisocyanate sind beispielsweise solche der Formel

$$Q(NCO)_2$$

für welche

Q für einen aliphatischen Kohlenwasserstoffrest mit 2 bis 18, vorzugsweise 6 bis 10 Kohlenstoffatomen, einen cycloaliphatischen Kohlenwasserstoffrest mit 4 bis 15, vorzugsweise 5 bis 13 Kohlenstoffatomen, einen aromatischen Kohlenwasserstoffrest mit 6 bis 15, vorzugsweise 6 bis 13 Kohlenstoffatomen oder einen araliphatischen Kohlenwasserstoffrest mit 8 bis 15, vorzugsweise 8 bis 13 Kohlenstoffatomen steht.

Typische Beispiele derartiger Diisocyanate sind 1,6-Diisocyanatohexan, 1,10-Diisocyanatodecan, 1,3-Diisocyanato-cyclopentan, 1,4-Diisocyanatocyclohexan, 1-Isocyanato-3,3,5-trimethyl-5-isocyanatomethylcyclohexan, 4,4'-Diisocyanato-dicyclohexylmethan, 1,4-Diisocyanatobenzol, 2,4-Diisocyanatotoluol, seine Gemische mit bis zu 35 Gew.-%, bezogen auf Gesamtgemisch an 2,6-Diisocyanatotoluol, 4,4'-Diisocyanatodiphenylmethan, seine Gemische mit bis zu 60 Gew.-%, bezogen auf Gesamtgemisch, an 2,4'-Diisocyanatodiphenylmethan und gegebenenfalls untergeordneten Mengen an 2,2'-Diisocyanatodiphenylmethan oder 1,4-Bis-(isocyanatomethyl)-benzol. Besonders bevorzugte Aufbaukomponenten $b_1$) sind 2,4- Diisocyanatotoluol, dessen Gemische mit bis zu 35 Gew.-% bezogen auf Gesamtgemisch, an 2,6-Diisocyanatotoluol, 4,4'-Diisocyanatodiphenylmethan, dessen Gemische mit bis zu 60 Gew.-%, bezogen auf Gesamtgemisch an 2,4'-Diisocyanatodiphenylmethan, die noch untergeordneten Mengen an 2,2'-Diisocyanatodiphenylmethan (bis zu 5 Gew.-%) aufweisen können, 1,6-Diisocyanatohexan, 4,4'-Diisocyanato-dicyclohexylmethan und 1-Isocyanato-3,3,5-trimethyl-5-isocyanatomethyl-cyclohexan (Isophorondiisocyanat). Es können jedoch im Prinzip auch beliebige andere organische Diisocyanate Verwendung finden, wie z.B. Alkyl-substituierte Diisocyanatodiphenylmethane, Carbodiimid- oder Urethan-modifiziertes 4,4'- Diisocyanatodiphenylmethan oder beliebige Abmischungen derartiger Diisocyanate. Grundsätzlich können beliebige Abmischungen der beispielhaft genannten Diisocyanate Verwendung finden, obwohl dies weniger bevorzugt ist.

Bei der Aufbaukomponenten $b_2$) handelt es sich um ein Gemisch im wesentlichen Ethergruppen-freier Polyesterdiole, welche der im Anspruch 1 gegebenen Definition entsprechen. Es ist wesentlich, dass die Polyesterkomponente $b_2$) sowohl eingebaute aliphatische als auch eingebaute aromatische Dicarbonsäuresegmente im Molverhältnis aliphatische: aromatische Dicarbonsäuren von 8:1 bis 1:5, vorzugsweise 3:1 bis 1:2 enthält. Ausgangsmaterialien zur Herstellung der Polyesterdiole sind Adipinsäure und orthoPhthalsäure bzw. deren Anhydride und Alkandiole mit 2 bis 6 Kohlenstoffatomen.

Geeignete Alkandiole sind solche einer linearen oder verzweigten Kohlenstoffkette wie z.B. Ethylenglykol, 1,2-Dihydroxypropan, 1,3-Dihydroxypropan, 1,4-Dihydroxybutan, 1,6-Dihydroxyhexan oder Neopentylglykol.

Als gegebenenfalls mitzuverwendende Kettenverlängerungsmittel $b_3$) kommen neben den zuletzt als Aufbaukomponente für die Polyesterdiole genannten Diole beliebige zwei- und/oder dreiwertige Alkohole des Molekulargewichtsbereichs 62 bis 400 in Betracht, wie z.B. 1,2-Dihydroxypropan, 1,8-Dihydroxyoctan, 1,4-Bishydroxymethyl-cyclohexan, 2-Methyl-1,3-dihydroxypropan, Dimethylolpropionsäure, Glycerin, Trimethylolpropan, 1,2,6-Trihydroxyhexan, Diethylenglykol, Triethylenglykol, Tetraethylenglykol, Dipropylenglykol, Tripropylenglykol, Dibutylenglykol oder beliebige Gemische derartiger mehrwertiger Alkohole. Diese Kettenverlängerungsmittel werden, falls überhaupt, in Mengen von bis zu 100 Mol-%, bezogen auf die Komponente $b_2$) eingesetzt.

Die Herstellung der Oligourethane erfolgt nach bekannten Verfahren des Standes der Technik durch Umsetzung der Ausgangskomponenten in Lösung oder vorzugsweise in der Schmelze bei 80 bis 140 °C unter Einhaltung eines NCO/OH-Äquivalentverhältnisses, bezogen auf die Ausgangskomponenten, von 1:1,4 bis

1:5,0, vorzugsweise 1:1,8 bis 1:3,0.

Falls bei der Herstellung der Oligourethane Lösungsmittel eingesetzt werden, werden vorzugsweise solche der auch in den erfindungsgemäss zu verwendenden Klebstoffe vorliegenden Art verwendet. Es handelt sich um gegenüber Isocyanatgruppen inerte Lösungsmittel wie z.B. Aceton, Methylethylketon, Methylisobutylketon, Ethylacetat, Butylacetat oder beliebige Gemische derartiger Lösungsmittel, die auch noch aromatische Verdünner wie z.B. Toluol oder Xylol enthalten können.

Im Rahmen der Erfindung werden solche Oligourethane b) eingesetzt, deren Aufbaukomponente $b_2$) im wesentlichen aus einem Polyestergemisch der in Anspruch 1 definierten Art besteht.

Bei der Herstellung dieser Oligourethane können bis zu 100 Mol-%, bezogen auf die Menge des Polyestergemischs, an Kettenverlangerungsmitteln der beispielhaft genannten Art mitverwendet werden.

Besonders bevorzugt ist die Verwendung von Oligourethanen der genannten Art auf Basis von

$b_1$) 2,4-Diisocyanatotoluol bzw. dessen Gemischen mit bis zu 35 Gew.-%, bezogen auf Gesamtgemisch, an 2,6- Diisocyanatotoluol und

$b_2$) einem Polyestergemisch aus

(i) 70 bis 85 Gew.-% eines Polyesterdiols des Molekulargewichtsbereichs 1500 bis 2500 aus Adipinsäure und o-Phthalsäure im Molverhältnis 40:60 bis 70:30 und Ethylenglykol und

(ii) 15 bis 30 Gew.-% eines Polyesterdiols des Molekulargewichts 1500 bis 2500 aus Adipinsäure und einem Gemisch aus Ethylenglykol und 1,4-Dihydroxybutan im Molverhältnis 80:20 bis 20:80,

in einem Äquivalentverhältnis von Isocyanatgruppen zu Hydroxylgruppen von 1:1,8 bis 1:3,0 entsprechenden Mengen.

In den erfindungsgemäss zu verwendenden Klebstoffen können als weitere Bestandteile c) die aus der Klebstofftechnologie bekannten Hilfsund Zusatzmittel vorliegen. Es handelt sich hierbei insbesondere um, die Isocyanatadditionsreaktion beschleunigende, Katalysatoren wie z.B. Dibutylzinnoxid, Dibutylzinndilaurat, N,N-Dimethylanilin, und/oder Triethylendiamin, UV-Stabilisatoren und/oder klebrigmachende Harze. Die Mitverwendung der beiden letztgenannten Zusatzstoffe ist jedoch weniger bevorzugt.

Die erfindungsgemäss zu verwendenden Klebstoffe stellen Lösungen der Komponenten a), b) und gegebenenfalls c) in gegenüber Isocyanatgruppen inerten Lösungsmitteln der oben bereits beispielhaft genannten Art dar. In diesen Lösungen kann die Menge der Komponente a) in weiten Grenzen variiert werden. Sie richtet sich nach der Menge an aktiven Wasserstoffatomen der Komponente b) und der Art der herzustellenden Folienverbunde. Die Menge der Komponente a) entspricht mindestens einem NCO/OH-Äquivalentverhältnis, bezogen auf die Komponenten a) und b), von 1:1,5. Vorzugsweise entspricht die Menge der Komponente a) einem NCO/OH-Äquivalentverhältnis von 1:1,3 bis 1:0,5.

Die erfindungsgemäss zu verwendenden Klebstoffe stellen vorzugsweise Lösungen mit einem Feststoffgehalt, bezogen auf die Komponenten a) bis c), von 45 bis 70 Gew.-% dar. Die frisch zubereiteten Lösungen weisen trotz dieses hohen Feststoffgehalts in der Regel eine unter 150 mPa·s liegende Viskosität auf. Die Zubereitung der Klebstofflösung erfolgt vorzugsweise durch Vereinigung der vorab gelösten Komponenten a) und b), wobei die Lösung der Komponente b) auch die gegebenenfalls mitzuverwendende Komponente c) enthält. Die Verarbeitbarkeit der so hergestellten Lösungen ist bei Raumtemperatur für einen Zeitraum von ca. 8 Stunden gegeben.

Die erfindungsgemäss zu verwendenden Klebstofflösungen eignen sich zur Herstellung von Folienverbunden, d.h. von Verbunden der unterschiedlichsten Kunststoff- oder Metallfolien mit sich selbst oder untereinander. Beispiele für erfindungsgemäss zu verklebende Folien können den nachfolgenden Ausführungsbeispielen entnommen werden.

Die Herstellung der Folienverbunde erfolgt in an sich bekannter Weise, beispielsweise dergestalt, dass zumindest eine der miteinander zu verbindenden Folienoberflächen mit der erfindungsgemäss zu verwendenden Klebstofflösung in einer Menge von ca. 0,5 bis 10, vorzugsweise 1 bis 5 g/m², bezogen auf Feststoff, beschichtet wird. Nach kurzzeitiger Erhitzung der beschichteten Folie auf eine Temperatur im Temperaturbereich von beispielsweise 60 bis 100 °C zwecks Verdunsten der Hauptmenge des vorliegenden Lösungsmittels, werden die Folienoberflächen vereinigt.

Die nachfolgenden Beispiele dienen der weiteren Erläuterung der Erfindung.

## Beispiele

In den nachfolgenden Beispielen werden folgende Polyesterdiole eingesetzt:

I Mischester aus Adipinsäure und o-Phthalsäure (molares Verhältnis 1:1) und Ethylenglykol, OH-Zahl: 65; Säurezahl: 1,3

II Mischester aus Adipinsäure und Ethylenglykol/1,4- Dihydroxybutan im Molverhältnis 7:3. OH -Zahl: 55; Säurezahl: 1,0

III Mischester aus Adipinsäure und Ethylenglykol/1,4- Dihydroxybutan im Molverhältnis 1:1, OH -Zahl: 56; Säurezahl: 0,9

IV Mischester aus Adipinsäure und o-Phthalsäure (molares Verhältnis 1:1) und 1,6-Dihydroxyhexan, OH-Zahl: 62; Säurezahl: 1,5

V Mischester aus Adipinsäure und 1,4-Dihydroxybutan/1,6- Dihydroxyhexan im Molverhältnis 7:3, OH-Zahl: 58; Säurezahl: 0,9

VI Mischester, erhalten durch 8-stündiges Erhitzen von 1 Mol I und 0,25 Mol II auf 190 °C. OH-Zahl: 62; Säurezahl: 1,2

VII Polyester aus o-Phthalsäure und Ethylenglykol, OH-Zahl: 57; Säurezahl: 1,5

VIII Polyester aus Adipinsäure und o-Phthalsäure im Molverhältnis 1:1 und 1,6-Dihydroxyhexan, OH-Zahl: 38,7; Säurezahl: 1,1.

Zur Herstellung der Oligourethane werden die in der nachfolgenden Tabelle 1 aufgelisteten Polyester bzw. Polyestergemische zusammen mit dem gegebenenfalls mitverwendeten Kettenverlängerungsmittel (Beispiel 3) durch 1-stündiges Erhitzen in einem Vakuum von 16 mbar auf 100 °C entwässert. Anschliessend werden die in der Tabelle 1 angegebenen Polyisocyanate bei 100-120 °C unter Rühren hinzugegeben. Nach 6-stündiger Reaktionszeit bei 100-120 °C liegen NCO-Gruppen-freie Umsetzungsprodukte vor, die anschliessend nach Abkühlen bei Raumtemperatur in Ethylacetat zu Lösungen mit einem Feststoffgehalt von 50 Gew.-% gelöst werden. In der Tabelle 1 sind die zur Herstellung der Oligourethane eingesetzten Ausgangsmaterialien der Beispiele 1 bis 11 und die Viskositäten der resuitierenden Lösungen zusammengefasst.

Zur Herstellung von gebrauchsfertigen Klebstofflösungen werden jeweils 100 g der in Tabelle 1 aufgelisteten 50-Gew.-%igen Lösungen der Oligourethane mit 10 g einer 75-Gew.- %igen Lösung in Ethylacetat eines Umsetzungsprodukts von 3 Mol 2,4-Diisocyanatotoluol mit 1 Mol Trimethylolpropan verrührt.

Innerhalb eines Zeitraums von 60 Minuten werden die so hergestellten frischen Klebstofflösungen zur Herstellung von Folienverbunden verarbeitet. Hierzu werden die Klebstofflösungen mit einem Rillenrakel in einer Menge von ca. 2 g/m$^2$, bezogen auf Feststoff, auf eine der miteinander zu verbindenden Folienoberflächen aufgetragen. Anschliessend werden jeweils die beschichteten Folien während eines Zeitraums von 20 Sekunden auf ca. 80°C erwärmt. Die Vereinigung der Fölien erfolgt dann unter dem Anpressdruck zweier Gummiwalzen. Die Verbundfestigkeit (N/15 mml wird innerhalb 5 Minuten nach Vereinigung im Schälversuch bei einem Reisswinkel von 90° und einer Reissgeschwindigkeit von 100 mm/min ermittelt. Zur Ermittlung der Lösungsmittelabgabe der zur Herstellung der Folienverbunde verwendeten Klebstoffe werden 5 g der jeweiligen Klebstofflösung in eine Metallschale mit einer Oberfläche von 54,1 cm$^2$ eingewogen. Auf einer 50 °C heissen Platte wird in regelmässigen Zeitabständen der Lösungsmittelverlust ermittelt. Die Zahlenwerte in Tabelle 2 beziehen sich auf die Zeiten (Minuten), die bis zum Verdunsten von 85% des Lösungsmittels verstreichen.

Es wurden folgende Folienverbunde hergestellt:

Verbund A: Aluminium (40 µm) Polyethylenterephthalat (50 µm)
Verbund B: Aluminium (40 µm) Polypropylen ( 50 um )
Verbund C: Polyamid (50 µm) Polyethylen (50 um)
Verbund D: Polypropylen (50 um) Polyethylen (50 µm)

Die ermittelten Verbundfestigkeiten werden in der Tabelle 2 mitgeteilt. Die beispiele 8 bis 11 stellen Vergleichsbeispiele (nur eine Polyesterkomponente) dar.

Tabelle 1

| Beispiel | Mol | Polyester | Mol Polyester | Mol Kettenverlängerer | Mol Diisocyanat | Viskosität (mPa·s/25 °C) |
|---|---|---|---|---|---|---|
| 1 | 1 | I | 0.25 II | – | 0.68 TDI[1] | 70 |
| 2 | 1 | I | 0.25 III | – | 0.68 TDI | 75 |
| 3 | 1 | I | 0.25 II | 0.6 Ethylenglykol | 0.93 TDI | 85 |
| 4 | 1 | IV | 0.25 II | – | 0.68 TDI | 80 |
| 5 | 1 | I | 0.25 V | – | 0.68 TDI | 80 |
| 6 | 1 | I | 0.25 II | – | 0.68 H[2] | 70 |
| 7 | 1 | I | 0.25 II | – | 0.68 44[3] | 75 |
| 8 | 1 | I | – | – | 0.55 TDI | 75 |
| 9 | 1 | II | – | – | 0.55 TDI | 80 |
| 10 | 1 | VI | – | – | 0.55 TDI | 65 |
| 11 | 1 | VII | – | – | 0.55 TDI | 80 |
| 12 | 1 | VIII | 0.25 II | – | 0.45 TDI | 100 |

[1] Gemisch aus 65 Gew.-% 2.4- und 35 Gew.-% 2.6-Diisocyanatotoluol
[2] 1,6-Diisocyanatohexan
[3] 4,4'-Diisocyanatodiphenylmethan

Tabelle 2

| Beispiel | Ethylacetatabgabe (min) | Verbund A | | Verbund B | | Verbund C | | Verbund D | |
|---|---|---|---|---|---|---|---|---|---|
| | | sofort N/15 mm | n.1.Monat N/15 mm | sofort N/15 mm | n.1.Monat N/15 mm | sofort N/15 mm | n.1.Monat N/15 mm | sofort N/15 mm | n.1.Monat N/15 mm |
| 1 | 42 | 3 | Abriss | 4 | 7.4 | 3.8 | 8.0 | 4 | Abriss |
| 2 | 48 | 3.4 | Abriss | 4.3 | 8 | 3.5 | Abriss | 3.7 | Abriss |
| 3 | 50 | 3.1 | 9.0 | 4.5 | Abriss | 4 | Abriss | 3.7 | Abriss |
| 4 | 34 | 2.8 | 8.5 | 3.6 | 9 | 2.9 | 11.0 | 2.8 | Abriss |
| 5 | 40 | 2.9 | Abriss | 3 | 8.5 | 3 | 8.0 | 3.1 | 12 |

Tabelle 2 (Fortsetzung)

| Beispiel | Ethylacetatabgabe (min) | Verbund A | | Verbund B | | Verbund C | | Verbund D | |
|---|---|---|---|---|---|---|---|---|---|
| | | sofort N/15 mm | n.1.Monat N/15 mm | sofort N/15 mm | n.1.Monat N/15 mm | sofort N/15 mm | n.1.Monat N/15 mm | sofort N/15 mm | n.1.Monat N/15 mm |
| 6 | 41 | 2,8 | 11,0 | 3,5 | 9,3 | 3,2 | 9,1 | 3 | Abriss |
| 7 | 53 | 2,4 | Abriss | 3,4 | 7,4 | 3,4 | 7,4 | 3,6 | Abriss |
| 8 | 150 | 3,3 | Abriss | 3,3 | 7,8 | 3,5 | Abriss | 3,3 | Abriss |
| 9 | 35 | 0,4 | Abriss | 0,3 | 6 | 0,5 | Abriss | 0,3 | Abriss |
| 10 | 105 | 3,5 | Abriss | 3,8 | 9 | 3,5 | 9,5 | 3,2 | Abriss |
| 11 | 190 | 1,5 | 3,0 | 2,3 | 3,5 | 3,8 | 3,4 | 2,3 | 3,5 |
| 12 | 30 | 2,9 | Abriss | 3,5 | 8,0 | 3,7 | 8,7 | 3,8 | Abriss |

**Patentansprüche**

1. Verwendung von Lösungen mit einem Feststoffgehalt von mindestens 45 Gew.-% in gegenüber Isocyanatgruppen inerten organischen Lösungsmitteln von

a) mindestens einem organischen Polyisocyanat mit einer (mittleren) NCO-Funktionalität von mindestens 2,0,

b) mindesten einem ein im wesentlichen urethanmodifiziertes, Ethergruppen-freies Polyesterpolyol darstellenden Oligourethan mit einem Hydroxylgruppengehalt von 0,4 bis 2,2 Gew.-%, einem Urethangruppengehalt von 1,4 bis 7 Gew.-% und einem Molekulargewicht von 1500 bis 8000, welches sowohl aliphatische als auch aromatische Dicarbonsäuresegmente in über Estergruppen eingebauter Form enthält,

c) gegebenenfalls den aus der Klebstofftechnologie bekannten Hilfs- und Zusatzmitteln, wobei die Mengen der Komponenten a) und b) einem NCO/OH-Äquivalentverhältnis von mindestens 1:1,5 entsprechen, als Klebemittel bei der Herstellung von Folienverbunden, dadurch gekennzeichnet, dass man als Komponente b) Umsetzungsprodukte verwendet

$b_1$) mindestens eines organischen Diisocyanates mit

$b_2$) einem Polyestergemisch, bestehend im wesentlichen aus

(i) 50 bis 90 Gew.-% eines Polyesterdiols des Molekulargewichtsbereichs 1400 bis 3000 aus Adipinsäure und ortho- Phthalsäure im Molverhältnis 40:60 bis 80:20 und überschüssigen Mengen eines Alkandiols mit 2-6 C-Atomen und

(ii) 10 bis 50 Gew.-% eines Polyesterdiols des Molekulargewichtsbereichs 1000 bis 3000 aus Adipinsäure und einer überschüssigen Menge einer Mischung von mindestens zwei voneinander verschiedenen Alkandiolen mit 2-6 C-Atomen, wobei mindestens zwei der Alkandiole in einer Menge von mindestens 20 Mol-% vorliegen, wobei die Komponente $b_2$) aliphatische und aromatische Dicarbonsäuresegmente im Molverhältnis 8:1 bis 1:5 enthält, und gegebenenfalls

$b_3$) niedermolekularen Kettenverlängerungsmitteln, wobei bei der Herstellung der Oligourethane b) ein NCO/OH-Aquivalentverhältnis von 1:1,4 bis 1:5,0 eingehalten wird.

2. Verwendung gemäss Anspruch 1, dadurch gekennzeichnet, dass man als Komponente $b_3$) bis zu 100 Mol-% bezogen auf die Komponente $b_2$), mindestens eines zwei- oder dreiwertigen Alkohols des Molekulargewichtsbereichs 62 bis 400, unter Einhaltung eines NCO/OH-Äquivalentverhältnisses von 1:1,8 bis 1:3 einsetzt und im übrigen die Komponenten a) und b) in, einem NCO/OH-Äquivalentverhältnis von 1:1,3 bis 1:0,5 entsprechenden Mengen verwendet.

3. Verwendung gemäss Anspruch 1 und 2, dadurch gekennzeichnet,dass man als Komponente b) ein Umsetzungsprodukt aus

$b_1$) 2,4-Diisocyanatotoluol oder einem Gemisch aus 2,4-Diisocyanatotoluol mit bis zu 35 Gew.-%, bezogen auf Gesamtgemisch, an 2,6-Diisocyanatotoluol mit

$b_2$) einem Polyestergemisch bestehend aus 70 bis 85 Gew.-% eines Polyesterdiols des Molekulargewichtsbereichs 1500 bis 2500 aus Adipinsäure und o-Phthalsäure im Molverhältnis 40:60 bis 70:30 und Ethylenglykol und 15 bis 30 Gew.-% eines Polyesterdiols des Molekulargewichtsbereichs 1500 bis 2500 aus Adipinsäure und einem Gemisch aus Ethylenglykol und 1,4-Dihydroxybutan im Molverhältnis 80:20 bis 20:80, unter Einhaltung eines NCO/OH-Äquivalentverhältnisses von 1:1,8 bis 1:3,0 einsetzt.

4. Verwendung gemäss Anspruch 1 bis 3, dadurch gekennzeichnet, dass man die Klebstoffe als Lösungen in gegenüber Isocyanatgruppen inerten Lösungsmitteln mit einem Feststoffgehalt von 45 bis 70 Gew.-% verwendet.

## Claims

1. The use of solutions having a solids content of at least 45% by weight in isocyanate-inert organic solvents of

a) at least one organic polyisocyanate having an (average) NCO functionality of at least 2.0,

b) at least one oligourethane representing a substantially urethane-modified polyester polyol free from ether groups having a hydroxyl group content of 0.4 to 2.2% by weight, a urethane group content of 1.4 to 7% by weight and a molecular weight of 1,500 to 8,000, which contains both aliphatic and aromatic dicarboxylic acid segments incorporated through ester groups,

c) optionally the auxiliaries and additives known from adhesives technology, the quantities of components a) and b) corresponding to an NCO/OH equivalent ratio of at least 1:1.5, as adhesives in the production of laminates, characterized in that component b) is a reaction product of

$b_1$) at least one organic diisocyanate with

$b_2$) a polyester mixture consisting essentially of

(i) 50 to 90% by weight of a polyester diol having a molecular weight of from 1,400 to 3,000 of adipic

acid and orthophthalic acid in a molar ratio of 40:60 to 80:20 and excess quantities of a $C_{2-6}$ alkanediol and

(ii) 10 to 50% by weight of a polyester diol having a molecular weight of from 1,000 to 3,000 of adipic acid and an excess quantity of a mixture of at least two different $C_2$-6 alkanediols, at least two of the alkanediols being present in a quantity of at least 20 mol-%,

component $b_2$) containing aliphatic and aromatic dicarboxylic acid segments in a molar ratio of 8:1 to 1:5, and, optionally,

$b_3$) low molecular weight chain-extending agents, an NCO;OH equivalent ratio of 1:1.4 to 1:5.0 being maintained in the preparation of the oligourethanes b).

2. The use claimed in claim 1, characterized in that up to 100 mol-%, based on component $b_2$), of at least one dihydric or trihydric alcohol having a molecular weight in the range from 62 to 400 is used as component $b_3$), an NCO:OH equivalent ratio of 1:1.8 to 1:3 being maintained, and in that components a) and b) are used in quantities corresponding to an NCO:OH equivalent ratio of 1:1.3 to 1:0.5.

3. The use claimed in claims 1 and 2, characterized in that component b) is a reaction product of

$b_1$) 2,4-diisocyanatotoluene or a mixture of 2,4-diisocyanatotoluene with up to 35% by weight, based on the mixture as a whole, of 2,6-diisocyanatotoluene with

$b_2$) a polyester mixture consisting of 70 to 85% by weight of a polyesterdiol having a molecular weight in the range from 1,500 to 2,500 of adipic acid and o-phthalic acid in a molar ratio of 40:60 to 70:30 and ethylene glycol and 15 to 30% by weight of a polyester diol having a molecular weight in the range from 1,500 to 2,500 of adipic acid and a mixture of ethylene glycol and 1,4-dihydroxybutane in a molar ratio of 80:20 to 20:80, in an NCO:OH equivalent ratio of 1:1.8 to 1:3.0.

4. The use claimed in claims 1 to 3, characterized in that the adhesives are used in the form of solutions in isocyanate-inert solvents having a solids content of 45 to 70% by weight.

**Revendications**

1. Utilisation de solutions, à une teneur en matières solides d'au moins 45 % en poids dans des solvants organiques inertes à l'égard des groupes isocyanate, de

a) au moins un polyisocyanate organique ayant une fonctionnalité (moyenne) en NCO d'au moins 2,0,

b) au moins un oligouréthanne consistant en un polyesterpolyol exempt de groupes éther, essentiellement modifié en uréthanne, à une teneur en groupes hydroxyle de 0,4 à 2,2 % en poids, une teneur en groupes uréthanne de 1,4 à 7 % en poids et un poids moléculaire de 1 500 à 8 000, contenant à la fois des segments d'acides dicarboxyliques aliphatiques et des segments d'acides dicarboxyliques aromatiques à l'état combiné chimiquement par l'intermédiaire de groupes ester,

c) le cas échéant les produits auxiliaires et additifs connus dans la technique des colles, les quantités des composants a) et b) correspondant à un rapport d'au moins 1 : 1,5 entre les équivalents de groupes NCO et les équivalents de groupes OH, en tant que colles à la fabrication de feuilles composites, caractérisée en ce que l'on utilise en tant que composant b) des produits de réaction de

$b_1$) au moins un diisocyanate organique, avec

$b_2$) un mélange de polyesters consistant essentiellement en :

i) 50 à 90 % en poids d'un polyester-diol, de poids moléculaire 1 400 à 3 000, de l'acide adipique et de l'acide orthophtalique à un rapport molaire de 40 : 60 à 80 : 20 et d'un excès d'un alcane-diol en $C_2$-$C_6$, et

ii) 10 à 50 % en poids d'un polyester-diol, de poids moléculaire 1 000 à 3 000, de l'acide adipique et d'un excès d'un mélange d'au moins deux alcanediols différents en $C_2$-$C_6$, au moins deux des alcanediols étant présents en quantité d'au moins 20 moles %, le composant $b_2$) contenant des segments d'acides dicarboxyliques aliphatiques et des segments d'acides dicarboxyliques aromatiques à un rapport molaire de 8 : 1 à 1 : 5, et le cas échéant

$b_3$) des segments d'allongement de chaîne à bas poids moléculaire, en respectant à la préparation des oligouréthannes b) un rapport de 1 : 1,4 à 1 : 5,0 entre les équivalents de groupes NCO et les équivalents de groupes OH.

2. Utilisation selon la revendication 1, caractérisée en ce que l'on utilise en tant que composant $b_3$) jusqu'à 100 moles %, par rapport au composant $b_2$), d'au moins un alcool di- ou trivalent de poids moléculaire 62 à 400, en respectant un rapport de 1 : 1,8 à 1 : 3 entre les équivalents des groupes NCO et Les équivalents des groupes OH, et en utilisant par ailleurs les composants a) et b) en quantités correspondant à un rapport de 1 : 1,3 à 1 : 0,5 entre les équivalents des groupes NCO et les équivalents des groupes OH.

3. Utilisation selon les revendications 1 et 2, caractérisée en ce que l'on utilise en tant que composant b) un produit de réaction de :

$b_1$) le 2,4-diisocyanatotoluène ou un mélange de 2,4-diisocyanatotoluène avec des proportions allant jusqu'à 35 % en poids, par rapport au mélange total, de 2,6-diisocyanatotoluène, avec

$b_2$) un mélange de polyesters consistant en 70 à 85 % en poids d'un polyester-diol, de poids moléculaire 1 500 à 2 500, de l'acide adipique et de l'acide o-phtalique dans un rapport molaire de 40 : 60 à 70 : 30 et de l'éthylène-glycol, et 15 à 30 % en poids d'un polyester-diol, de poids moléculaire 1 500 à 2 500, de l'acide adipique et d'un mélange d'éthylène-glycol et du 1,4-dihydroxybutane à un rapport molaire de 80 : 20 à 20 : 80, en respectant un rapport de 1 : 1,8 à 1 : 3,0 entre les équivalents de groupes NCO et les équivalents de groupes OH.

4. Utilisation selon les revendications 1 à 3, caractérisée en ce que l'on utilise les colles à l'état de solutions dans des solvants inertes à l'égard des groupes isocyanate, à une teneur en matières sèches de 45 à 70 % en poids.